# DEMANDE DE BREVET EUROPEEN

(11) **EP 4 620 294 A1**
(43) Date de publication de la demande: **24.09.2025**
(21) Numéro de dépôt: 25155019.0
(22) Date de dépôt: 30.01.2025
(51) Int. Cl.: A01G 9/02, A01G 9/28

(54) **JARDINIÈRE BIOCLIMATIQUE DESTINÉE À LA CULTURE DE VÉGÉTAUX**

(30) Priorité: 30.01.2024 FR 2400896
(71) Demandeur: TERRE " MIK, 13600 La Ciotat (FR)
(72) Inventeur: Jaulard, Wilfried, 13600 La Ciotat (FR)
(74) Mandataire: Brun, Philippe Alexandre Georges

(57) **Abrégé**

La divulgation concerne une jardinière (100) comprenant un bac (101), apte à accueillir de la terre et des végétaux, constitué d'un fond (110) et de parois verticales (120). Le bac (101) est réalisé en bois et un parement extérieur (150) habille les parois (120) du bac (101). Au moins une paroi (120), destinée à être exposée au soleil, est équipée d'un moyen de refroidissement comprenant un entrecroisement d'au moins deux montants (130) fixés à au moins deux traverses (140), lesdits montants (130) étant espacés l'un de l'autre et lesdites traverses (140) étant espacées l'une de l'autre, ledit entrecroisement étant fixé entre la face externe de ladite au moins une paroi (120) et le parement extérieur (150), de manière à créer un espace de circulation d'air favorisant un refroidissement de ladite paroi (120).

## Description

La présente invention se rapporte à une jardinière bioclimatique destinée à la culture de végétaux. Le terme « végétaux » concerne tout type de plantes, que ce soit des plantes décoratives, à fleurs, des arbustes ou encore des fruits et légumes.

Il existe sur le marché beaucoup de jardinières en plastique dont le bac, destiné à accueillir la terre de culture et les végétaux, est généralement réalisé par rotomoulage. Ces jardinières comprennent en général un double fond dans lequel est disposée une réserve d'eau. L'eau remonte ensuite par capillarité dans la terre de culture, soit au moyen de mèches s'étendant dans la terre et baignant dans l'eau de la réserve, soit au moyen de bols à parois perforées faisant saillies dans la réserve d'eau et comprenant un peu de substrat. Certaines de ces jardinières comprennent une double paroi, remplie d'air, permettant une petite isolation thermique de la jardinière.

Ainsi, la demande de brevet EP1 055 364, décrit une jardinière obtenue par rotomoulage et comprenant une double paroi. L'espace entre les deux parois verticales est rempli d'air tandis que l'espace situé dans la double paroi du fond sert de réserve d'eau, au moins une ouverture étant prévue sur la paroi externe du fond pour permettre une alimentation en eau de la réserve. La paroi interne du fond comprend une cheminée dont les parois latérales sont pourvues d'au moins un orifice par lequel traverse une mèche s'étendant de l'intérieur du bac à terre et se prolongeant dans la réserve d'eau, de manière à permettre une remontée d'eau par capillarité dans la terre.

Dans ce genre de jardinière, l'espace entre les parois interne et externe de la double paroi verticale mesure en général entre quelques millimètres et une dizaine de millimètres. Le problème de ces jardinières en plastique à double paroi fermée réside dans le fait que, lorsqu'elles sont soumises à de fortes chaleurs, le plastique gonfle et s'abîme. Pour éviter ce phénomène de gonflement, une solution consiste à prévoir des orifices en haut et en bas de cette double paroi pour créer une petite aération. Cependant, ces orifices laissent passer les eaux de pluies ou d'arrosage qui stagnent dans les rigoles et attirent les moustiques.

La demande de brevet WO 2007/071941 décrit une jardinière permettant une meilleure gestion du système d'irrigation, capable de délivrer la juste quantité d'eau et d'éviter une saturation de la terre en eau ou au contraire un manque d'eau. La jardinière décrite comprend, dans sa partie supérieure, une chambre fermée comprenant de l'air. Cette chambre est en communication fluidique avec une réserve d'eau située dans le fond de la jardinière. Lorsque la température environnante augmente, la pression exercée sur l'air est plus importante, de sorte que l'air contenu dans la chambre exerce une pression plus importante sur l'eau contenue dans la réserve et force l'eau à remonter vers le substrat de culture à travers une tubulure. Inversement, lorsque la température diminue, la pression diminue et l'eau en excès dans le substrat peut s'écouler à travers la tubulure vers la réserve d'eau.

La demande de brevet FR3048328 décrit quant à elle une jardinière surélevée comprenant des parois latérales formées à partir de panneaux de bois. Les jardinières en bois sont en général fabriquées avec un fond en bois ou en grillage fin et protégées par une bâche ou un géotextile. Cette demande de brevet décrit la possibilité de rajouter une cuve à réserve d'eau dans le fond de la jardinière, la cuve étant surmontée d'un fond formant un faux plancher du bac de culture, séparant le substrat de la réserve d'eau et équipé de bols à parois perforées faisant saillie dans la réserve d'eau.

Enfin, la demande FR3022627 décrit une jardinière cylindrique comprenant un organe d'obturation amovible, créant une zone tampon entre la terre de culture et l'organe d'obturation, afin d'isoler thermiquement le substrat de culture, de limiter l'évaporation de l'eau et de favoriser la condensation. Cet organe est fixé par le milieu de la jardinière et comprend des ouvertures pour permettre le passage des végétaux. Le diamètre de l'organe est inférieur à celui de la jardinière pour permettre un passage de l'eau d'arrosage ou de pluie à la périphérie. Il s'avère qu'un tel organe n'est pas pratique d'utilisation car il nécessite de planter un nombre de végétaux égal au nombre d'ouvertures permettant leur passage et de planter les végétaux en regard de ces ouvertures.

Les jardinières actuellement sur le marché comprennent, pour la plupart, des réserves d'eau destinées à réduire la fréquence des arrosages, tout en conservant une humidité de la terre entre deux arrosages. Or, ces réserves d'eau attirent de plus en plus de moustiques, vecteurs de maladies, qui deviennent un véritable problème de santé publique. Il devient donc de plus en plus important d'éviter la prolifération des moustiques. De plus, ces réserves d'eau ne suffisent pas à garantir une humidité constante dans le volume de terre, en cas de fortes chaleurs, et on assiste impuissant à un dépérissement des cultures. Les jardinières en plastique, du fait de leur matériau de constitution, ne sont pas très écologiques, contrairement au bois. Lorsqu'elles comprennent une double paroi, elles permettent une petite isolation thermique, mais qui s'avère insuffisante par fortes chaleurs.

Contrairement aux jardinières en plastique, il n'a jamais été prévu de double paroi sur les jardinières en bois, puisque le bois est connu pour être un bon isolant thermique naturel. Cependant, en l'absence de réserve d'eau, les jardinières en bois nécessitent tout de même des arrosages fréquents pour éviter un dépérissement des végétaux.

L'invention a donc pour but de remédier à au moins un des inconvénients de l'art antérieur. L'invention vise notamment à concevoir une jardinière bioclimatique, réalisée dans un matériau écologique, favorisant une bonne isolation thermique de la terre de culture et des végétaux, ne comprenant aucune réserve d'eau intégrée pour éviter le développement de moustiques et, dans un contexte où la gestion de l'eau devient cruciale, ne nécessitant que très peu d'arrosage grâce à une meilleure gestion de l'humidité contenue dans la terre de culture.

A cet effet, l'invention a pour objet une jardinière destinée à la culture de végétaux, ladite jardinière comprenant un bac apte à accueillir de la terre et des végétaux, ledit bac étant constitué d'un fond et de parois verticales, une bâche imperméable recouvrant la face interne des parois verticales et le fond du bac de manière à isoler le bac de l'humidité contenue dans la terre, ladite jardinière étant caractérisée en ce que le bac est réalisé dans un bois résistant aux variations d'humidité et de température, en ce qu'un parement extérieur habille la face externe des parois du bac, et en ce qu'au moins une paroi dudit bac, destinée à être exposée au soleil, est équipée d'un moyen de refroidissement, ledit moyen de refroidissement comprenant un entrecroisement d'au moins deux montants fixés à au moins deux traverses, lesdits montants étant espacés l'un de l'autre et lesdites traverses étant espacées l'une de l'autre, ledit entrecroisement étant fixé entre la face externe de ladite au moins une paroi et le parement extérieur, de manière à créer un espace de circulation d'air favorisant un refroidissement de ladite paroi.

Ainsi, l'espace supplémentaire créé entre au moins une paroi du bac et le parement d'habillage de la jardinière permet une circulation d'air suffisante pour refroidir la paroi de la jardinière et isoler thermiquement la terre et les végétaux contenus dans le bac. Ce moyen de refroidissement est avantageusement installé sur une ou plusieurs parois les plus exposées au rayonnement solaire en fonction de l'emplacement de la jardinière.

Selon d'autres caractéristiques optionnelles de la jardinière :
L'entrecroisement du moyen de refroidissement est perpendiculaire et fixé de sorte que les montants sont positionnés verticalement et parallèles entre - eux, fixés sur la face externe de ladite au moins une paroi et régulièrement espacés le long de la largeur de ladite paroi, et les traverses sont positionnées horizontalement et parallèles entre - elles, fixées sur lesdits montants et régulièrement espacées le long de la hauteur de ladite paroi.

La jardinière comprend un premier épaulement fixé sur une zone supérieure de la face interne des parois du bac et au-dessus de la surface de la terre, ledit premier épaulement permettant d'une part de maintenir la bâche fixement contre la face interne des parois du bac et d'autre part, de condenser de l'eau d'évaporation en fines gouttelettes destinées à retomber par gravité dans la jardinière ;
La jardinière comprend un deuxième épaulement, reposant sur le bord supérieur d'au moins une paroi du bac et/ou sur le premier épaulement, ledit deuxième épaulement présentant une surface plus importante que le premier épaulement, et étant apte à produire une ombre portée sur la surface de la terre et à condenser de l'eau d'évaporation en fines gouttelettes destinées à retomber par gravité dans la jardinière ;
La hauteur du parement extérieur varie le long du pourtour du bac et est au moins égale à la hauteur des parois du bac, de sorte que chaque hauteur projette une ombre portée différente sur la surface de terre ;
Au moins deux moyens d'évacuation sont prévus dans le fond du bac, chaque moyen comprenant un orifice débouchant, pratiqué dans l'épaisseur du fond du bac et accueillant un tube creux, de forme sensiblement conique et complémentaire dudit orifice, ledit tube présentant une collerette affleurant la surface du fond du bac et une partie cylindrique en saillie sous le fond du bac ; et un joint d'étanchéité destiné à maintenir fixement ledit tube et ladite bâche en position contre l'épaisseur dudit orifice ;
La jardinière comprend en outre un compartiment amovible de compostage, ledit compartiment étant accessible par la partie haute de la jardinière et comprenant des montants latéraux et un fond perforé reposant sur une couche de terre de ladite jardinière, ledit compartiment étant apte à être fermé au moyen d'une porte ;
Le bois de constitution du bac, des montants et des traverses est un contreplaqué encollé avec de la colle résistante à l'eau (WPB), le bois de constitution du contreplaqué étant choisi parmi le bouleau, le chêne, le peuplier, le châtaignier, le mélèze, le douglas, le robinier, l'iroko ou le teck ;
La jardinière comprend au moins quatre roulettes, dont au moins deux sont équipées d'un système de freinage, et une signalétique apte à permettre une orientation correcte de la jardinière par rapport au soleil ;
L'invention se rapporte en outre à une utilisation de la jardinière décrite ci-dessus, caractérisée en ce qu'elle consiste à remplir le bac d'une première couche de billes d'argile, à recouvrir ladite première couche d'une couche de terre, puis à recouvrir ladite couche de terre d'une deuxième couche de billes d'argile.

D'autres particularités et avantages de l'invention apparaitront à la lecture de la description faite à titre d'exemple illustratif et non limitatif, en référence aux figures annexées qui représentent :
- la figure 1, illustre une vue en perspective d'un mode de réalisation d'une jardinière selon l'invention ;
- la figure 2 illustre une vue de dessus de la jardinière de la figure 1 ;
- la figure 3 illustre une vue en coupe d'une paroi de la jardinière de la figure 1 équipée d'un moyen de refroidissement ;
- les figures 4A, 4B et 4C illustrent respectivement une vue en coupe d'un moyen d'évacuation de la jardinière, une vue en coupe et une vue de dessus d'un élément tubulaire constitutif dudit moyen d'évacuation ;
- la figure 5 illustre une vue en coupe d'une paroi de la jardinière selon une variante de réalisation ;
- les figures 6A et 6B respectivement une vue en coupe et une vue de dessus d'un compartiment amovible destiné au compost ;
- la figure 6C illustre une vue en perspective d'un détail d'un montant latéral du compartiment à compost des figures 6A et 6B.

Une « jardinière » au sens de l'invention, destinée à la culture de tout type de plantes, que ce soit des plantes décoratives, à fleurs, des arbustes ou encore des légumes, peut prendre tout type de forme, telles que des formes carrées ou rectangulaires, mais aussi des formes en L, en T, en U ou des formes polygonales par exemple.

On définit par « partie haute » d'une jardinière, la face supérieure ouverte par laquelle on vient déposer la terre et les végétaux.

On définit par « bac », un contenant destiné à recevoir la terre de culture et des végétaux, comprenant un fond parallèle au sol et des parois verticales. Le bac est ouvert par le dessus pour pouvoir y déposer la terre et les végétaux.

On définit par « face interne » d'une paroi du bac, la face située à l'intérieur du bac, en regard de la terre de culture et, à contrario, on définit par « face externe » d'une paroi du bac, la face située à l'extérieur du bac.

On définit par « hauteur d'une paroi » du bac, la distance entre le bord inférieur de la paroi, fixé au fond, et le bord supérieur de la paroi, opposé au fond, selon un axe perpendiculaire au sol.

On définit par « largeur d'une paroi », la distance entre deux extrémités d'une paroi selon un axe parallèle au sol.

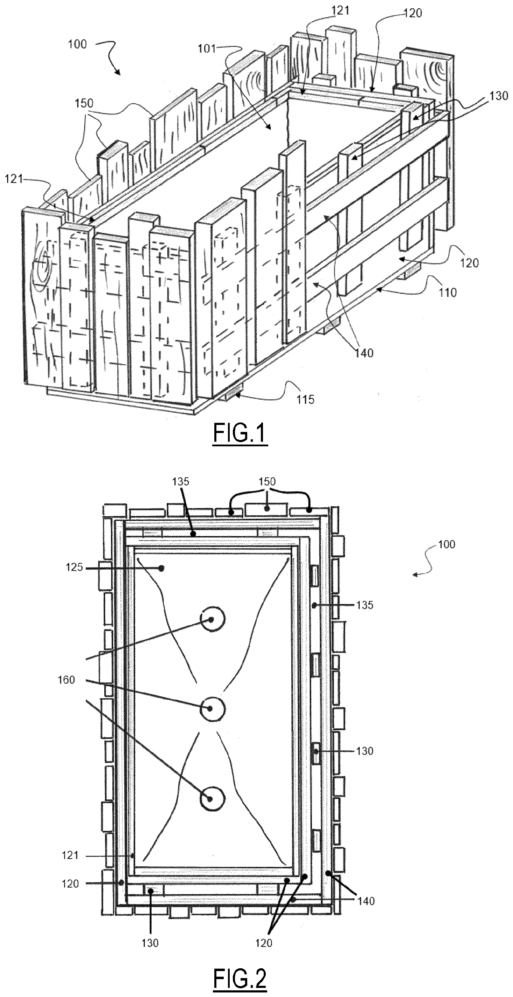

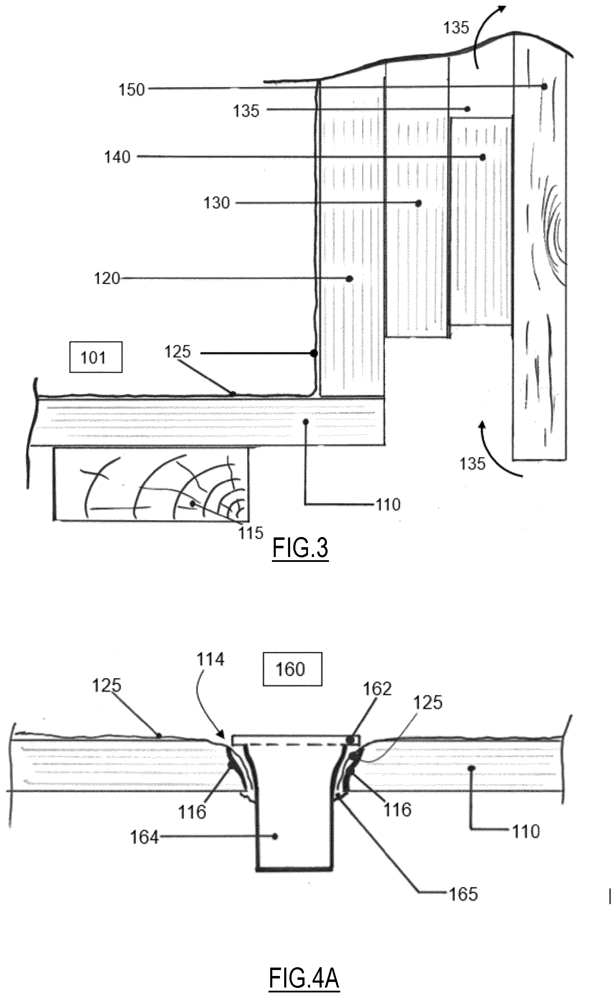

La figure 1 représente une vue en perspective d'une jardinière 100 selon un premier mode de réalisation de l'invention. La figure 2 représente cette même jardinière vue de dessus et la figure 3 une vue en coupe d'une des parois de ladite jardinière 100. Les mêmes références sont utilisées pour désigner les mêmes éléments sur ces trois figures. Pour une question de simplification des explications, ces trois figures sont décrites simultanément.

La jardinière 100 selon l'invention comprend un bac 101 apte à accueillir de la terre de culture et des végétaux. Le bac 101 est constitué d'un fond référencé 110, parallèle au sol, et de parois verticales 120 fixées au fond le long de sa bordure. Les parois verticales 120 sont fixées au fond par tout moyen connu tel que le vissage et/ou le collage et/ou le cloutage.

Le bac 101 est réalisé dans un bois imputrescible, c'est-à-dire un bois résistant aux variations d'humidité et de chaleur. De préférence, il s'agit d'un contreplaqué encollé avec de la colle résistante à l'eau et aux intempéries, telle qu'une colle de grade WBP (acronyme anglosaxon pour « Water Boiled Proof »). Le bois de constitution du contreplaqué peut être choisi parmi le bouleau, le chêne, le peuplier, le châtaignier, le mélèze, le douglas, le robinier, l'iroko ou le teck par exemple. De préférence le contreplaqué est un contreplaqué de bouleau, ce bois étant particulièrement dur et résistant.

Une bâche 125, imperméable à l'eau, recouvre la face interne des parois verticales 120 et le fond 110 du bac 101, de manière à isoler le bac 101 de l'humidité contenue dans la terre. Cette bâche 125 peut par exemple être réalisée dans du PVC (acronyme pour Polychlorure de vinyle) souple, du PEHD (acronyme pour Polyéthylène haute densité) souple ou encore du EPDM (caoutchouc synthétique monocouche dont l'acronyme signifie « Ethylène Propylène Diène Monomère »). De préférence, la bâche 125 est en PVC souple répondant à la norme EN13361, commercialisée par exemple sous la marque commerciale Ubbink, résistante aux ultraviolets, flexible à haute température, solide et résistante aux racines et microorganismes. Toutefois, l'invention ne se limite pas au type de matériau utilisé pour ladite bâche 125. Néanmoins, le choix préférentiel du ou des matériaux se fera en étant le plus respectueux de l'environnement et en limitant les substances nocives.

Les faces externes des parois 120 du bac 101 sont habillées d'un parement extérieur. Ce parement, référencé 150 sur les figures 1 à 3, peut être réalisé au moyen de planches de bois imputrescible, ou de tôles ou tout autre matériau décoratif du marché. Parmi les tôles, celles-ci peuvent être choisies parmi des tôles en fer ou en aluminium de quelques millimètres d'épaisseur, par exemple deux millimètres. Ainsi, une tôle en aluminium grain de riz peut par exemple être utilisée pour une finition haut de gamme. Le bois est cependant le matériau préféré car c'est un matériau non seulement écologique mais aussi bon isolant thermique. Le parement 150 peut en outre être personnalisé par l'ajout ou la découpe d'une décoration par exemple. Le parement 150 est fixé par tout moyen connu sur les parois externes du bac 101. Un exemple illustratif, mais aucunement limitatif, de parement 150 tel que représenté sur la figure 1, consiste à utiliser du bois de palettes récupérées. Ainsi, pour répondre aux problèmes environnementaux et de réduction des déchets, les palettes servant au transport de marchandises peuvent être recyclées pour un tel parement 150. Les planches sont alors disposées verticalement pour former un bardage. Leur épaisseur est comprise entre dix et vingt-cinq millimètres, et de préférence égale à dix-huit millimètres.

De manière avantageuse, la hauteur du parement 150 extérieur varie le long du pourtour du bac 101 et est au moins égale à la hauteur des parois 120 verticales du bac 101, de sorte que chaque hauteur, dépassant plus ou moins le bord supérieur des parois 120 du bac 101, projette une ombre portée différente sur la surface de la terre de culture en fonction de l'exposition de la jardinière 100 par rapport au soleil et contribue ainsi à éviter une surchauffe de la terre. Cette découpe variable et en décalé de la hauteur du parement 150 permet ainsi d'optimiser les zones ombragées. Sur la représentation illustrative mais non limitative de la figure 1, chaque planche constitutive du parement 150 présente une hauteur qui lui est propre et différente de celle de sa voisine.

De manière avantageuse, au moins une des parois 120 du bac 101 est en outre équipée d'un moyen de refroidissement 135. Ledit moyen 135 est disposé entre ladite paroi 120 du bac 101 et le parement 150 extérieur. Ce moyen de refroidissement 135 permet une circulation d'air du bas vers le haut de la jardinière 100 dans un espace situé entre ladite paroi 120 du bac 101 et le parement 150 extérieur. De préférence un tel moyen 135 est disposé sur au moins la paroi 120 la plus exposée au rayonnement solaire, c'est-à-dire la paroi 120 de la jardinière 100 destinée à être exposée au sud. Bien sûr, d'autres parois, et au plus toutes les parois 120, peuvent être équipées de ce moyen 135. Pour exemple, sur les figures 1 et 2, la jardinière 100 représentée est de forme rectangulaire et trois de ses parois 120 sur les quatre sont équipées de ce moyen de refroidissement 135.

Le moyen de refroidissement 135 comprend un entrecroisement d'au moins deux montants 130 fixés à au moins deux traverses 140. Les montants 130 sont espacés l'un de l'autre et les traverses 140 sont espacées l'une de l'autre. Cet entrecroisement est fixé entre la face externe d'au moins une paroi 120 et le parement extérieur 150, de manière à créer un espace de circulation d'air 135 favorisant un refroidissement de ladite paroi 120.

Dans un mode préféré de réalisation, l'entrecroisement est perpendiculaire et fixé de manière à ce que les au moins deux montants 130 soient positionnés verticalement et parallèles entre - eux, fixés sur la face externe de la paroi 120 verticale à isoler et régulièrement espacés le long de la largeur de ladite paroi 120. Les au moins deux traverses 140, fixées sur lesdits montants 130, sont positionnées horizontalement et parallèles entre-elles, régulièrement espacées le long de la hauteur de ladite paroi 120. Le parement extérieur 150 est ensuite fixé sur les traverses 140. Selon les dimensions du bac 101, et tel qu'illustré sur les figures 1 et 2, le moyen de refroidissement 135 peut comprendre plus de deux montants 130 et plus de deux traverses 140. Ainsi, l'espace créé par les montants 130 et les traverses 140, entre la paroi 120 du bac 101 à isoler et le parement 150 extérieur, crée une circulation d'air 135 entre le bas et le haut de la paroi 120, telle qu'illustrée par les deux flèches sur la figure 3. Cette circulation d'air 135 permet d'évacuer l'air chaud vers le haut et donc, de refroidir la paroi 120 de la jardinière 100 lors de fortes chaleurs. Cet espace d'air crée en outre une isolation thermique supplémentaire lors des températures hivernales, afin d'éviter le gel du système racinaire des végétaux.

De manière avantageuse, les montants 130 et les traverses 140 sont réalisés dans le même bois contreplaqué que le bac 101. Ils permettent en outre de consolider la structure du bac 101 et de le rigidifier.

L'épaisseur des parois verticales 120 du bac, des montants 130 et des traverses 140 est avantageusement comprise entre dix-huit et cinquante millimètres, et de préférence égale à vingt-et-un millimètres. L'épaisseur du fond 110 du bac 101 peut être légèrement inférieure et avantageusement comprise entre douze et dix-huit millimètres, de préférence quinze millimètres. L'espace formé par les montants 130 et les traverses 140 présente avantageusement une épaisseur comprise entre trente-six et cent millimètres, suffisante pour permettre une bonne circulation d'air apte à refroidir la paroi 120. Ainsi, lors de fortes chaleurs, le moyen de refroidissement 135 permet de diviser par deux la température de la paroi 120 du bac 101 équipée d'un tel moyen 135. La terre et les végétaux contenus dans le bac 101 ne souffrent alors pas de la chaleur ambiante.

Cet espace présente l'avantage de ne pas retenir les eaux de pluie ou d'arrosage qui s'évacuent directement vers le sol. De plus, ses dimensions sont suffisantes pour que la circulation d'air permette d'assécher le bois des traverses et d'éviter ainsi une stagnation de l'eau et un développement des moustiques.

Comme illustré sur les figures 1 et 2, lorsqu'une paroi 120 du bac 101 n'est pas pourvue d'un tel moyen de refroidissement 135, parce qu'elle est destinée à être orientée au nord ou contre un mur par exemple, mais que les parois 120 qui lui sont adjacentes et opposée en sont équipées, sa largeur est plus longue que la bordure du fond 110 du bac 101 à laquelle elle est fixée, pour tenir compte de l'épaisseur du moyen de refroidissement 135 prévu sur les parois adjacentes et pouvoir l'habiller du parement extérieur 150.

Le fond 110 du bac 101 repose avantageusement sur des pieds 115 afin de l'isoler du sol. Ces pieds 115 peuvent par exemple être réalisés dans le même matériau que celui du parement 150. Des pieds 115 peuvent être prévus à chaque angle de la jardinière 100 et, selon la taille de la jardinière 100, au milieu également. Lorsque le bardage est réalisé avec des planches de bois, telles que des planches de palettes par exemple, ces planches peuvent également être utilisées pour réaliser les pieds 115. Dans ce cas, au moins deux planches suffisent, leur longueur étant égale à la largeur du fond 110 du bac 101 et de telles planches permettent de supporter efficacement le poids de la terre de culture et des végétaux contenus dans le bac 101. Dans un exemple illustratif, ces planches présentent une épaisseur comprise entre dix-huit et cinquante millimètres, de préférence vingt-cinq millimètres et une largeur comprise entre cinquante et quatre-vingts millimètres, de préférence soixante-cinq millimètres.

De manière avantageuse, le fond 110 du bac 101 est équipé d'au moins deux moyens d'évacuation 160. Ces deux moyens d'évacuation 160 permettent d'éviter que de l'eau ne stagne au fond 110 du bac 101 et ne finisse pas créer des moisissures dans la terre et entrainer un pourrissement du système racinaire. Ces moyens d'évacuation 160 permettent également de créer des appels d'air entre eux mais aussi avec la surface de la terre, de sorte que la terre soit bien aérée et que le développement de moisissures soit évité.

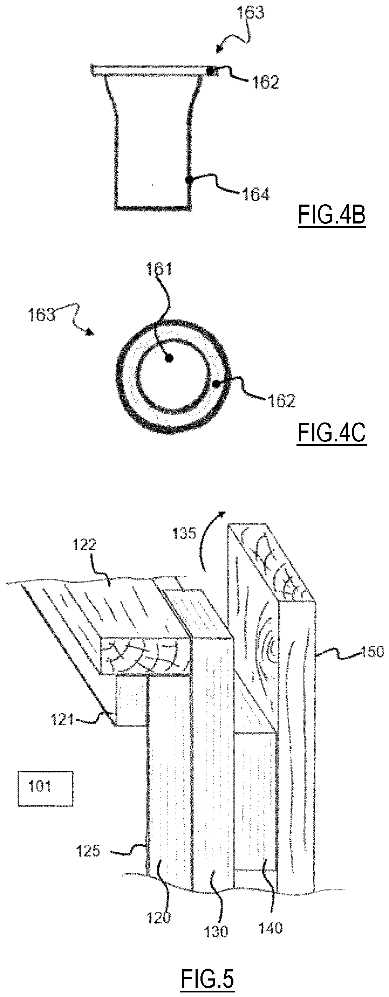

Un tel moyen d'évacuation 160 est représenté sur les figures 4A à 4C. Un orifice débouchant 114 est pratiqué dans l'épaisseur 116 du fond 110 du bac 101. Un tube 163 creux, présentant un trou débouchant 161, de forme sensiblement conique et complémentaire de l'orifice 114 s'insère dans l'orifice 114, de sorte que la collerette 162 située dans sa partie supérieure la plus large affleure la surface du fond 110 du bac 101 et que le corps cylindrique 164 du tube creux 163 fasse saillie en dessous et à l'extérieur du bac 101. Un joint d'étanchéité 165, en silicone par exemple, permet de maintenir fixement le tube 163 ainsi que la bâche 125 imperméable en position serrée contre l'épaisseur 116 de l'orifice 114, de sorte qu'aucune remontée d'humidité ne peut avoir lieu entre la bâche 125 et le fond 110 du bac 101. Ainsi l'eau de pluie ou d'arrosage ne peut pas stagner et coule directement par le trou débouchant 161 du tube 163 disposé dans chacun des orifices 114 ménagés dans le fond 110 du bac 101. Le tube 163 constitutif du moyen d'évacuation 160 peut avantageusement être réalisé dans un matériau plastique de grade alimentaire, afin de ne pas polluer les cultures, tel que, par exemple, du PET (acronyme pour Polyéthylène téréphtalate).

De manière avantageuse, et tel que représenté sur les figures 1, 2 et 5, la jardinière 100 comprend en outre un premier épaulement 121 disposé le long du pourtour supérieur de la face interne des parois 120 verticales du bac 101. Cet épaulement est fixé, par tout moyen connu, sur une zone supérieure de la face interne de chaque paroi 120 du bac 101. De préférence, il est fixé sur une zone d'extrémité, de sorte qu'il affleure le bord supérieur de la paroi verticale 120. Il permet ainsi de serrer la bâche 125 contre la paroi 120 et de la maintenir en place, de sorte qu'aucune humidité ne peut s'insérer entre la bâche 125 et la paroi 120 du bac 101. De plus, la largeur de cet épaulement étant avantageusement comprise entre dix et vingt-cinq millimètres, de préférence quinze millimètres, elle permet d'améliorer l'aspect esthétique de la jardinière en dissimulant la bâche 125, de sorte que celle-ci n'est pas visible lorsqu'une personne regarde la jardinière 100.

Cet épaulement 121 est disposé au-dessus de la surface de la terre, de préférence à une distance sensiblement comprise entre dix et cinquante millimètres. Ainsi, il permet avantageusement de favoriser la condensation de l'eau provenant de l'évaporation des faces internes des parois 120 tapissées de la bâche 125 imperméable. Les gouttes d'eau se condensant sur la surface de l'épaulement 121 retombent par gravité dans la terre, la conservant ainsi plus longtemps humide.

De manière avantageuse, un deuxième épaulement 122, tel que représenté sur la vue en coupe de la figure 5 est prévu en cas de très fortes chaleurs. Ce deuxième épaulement 122 repose sur le bord supérieur d'au moins une des parois 120 du bac 101 et/ou sur le premier épaulement 121. Ce deuxième épaulement 122 présente une épaisseur sensiblement identique au premier épaulement 121 et une largeur plus importante que le premier épaulement 121, comprise avantageusement entre trente et quatre-vingt millimètres selon la largeur de la jardinière 100, de préférence quarante millimètres, afin de laisser un espace suffisant, au milieu de la jardinière 100, au minimum compris entre quatre-vingt et deux cents millimètres, pour que les végétaux puissent pousser sans gêne et pour pouvoir également y disposer des tuteurs. Ce deuxième épaulement 122 est disposé à une distance sensiblement comprise entre quarante et quatre-vingts millimètres de la surface de la terre. Il projette une ombre portée sur la terre de culture, afin d'éviter une surchauffe de celle-ci, et permet de favoriser la condensation de l'eau s'évaporant de la surface de la terre. Les gouttes d'eau se condensant sur sa surface retombent alors par gravité dans la terre, la conservant ainsi plus longtemps humide. Ce deuxième épaulement 122 permet en outre de créer une isolation thermique supplémentaire au-dessus de la surface de terre, lors des températures hivernales, et de protéger ainsi les cultures du gel. Il peut être fixé par tout moyen connu, de type collage et/ou vissage et/ou clouage, sur le bord supérieur des parois 120 et sur le premier épaulement 121.

Selon une variante de réalisation, ce deuxième épaulement 122 peut être simplement posé. Il peut aussi être maintenu en place au moyen de petits aimants plats, éventuellement revêtus d'une couche de caoutchouc, disposés d'une part sur le premier épaulement 121 et/ou le bord supérieur de la paroi 120 et d'autre part sur la surface dudit deuxième épaulement 122 destinée à se placer en regard du premier épaulement 121, de sorte que ce deuxième épaulement 122 peut être facilement retiré en cas de besoin.

Le double épaulement 121, 122 qui vient d'être décrit projette une ombre portée sur la surface de la terre de culture permettant d'éviter une surchauffe de celle-ci et assure la récupération des gouttes d'eau recondensées provenant de l'évaporation des faces internes des parois 120 tapissées de la bâche 125 imperméable et de la surface de la terre. Ce double épaulement 121, 122 contribue à une meilleure conservation de l'humidité de la terre dans le temps.

En complément, la jardinière 100 selon l'invention peut comprendre un compartiment 200 amovible de compostage. Ce compartiment 200 peut être disposé à une extrémité de la jardinière 100 ou au milieu. Il est de préférence disposé au milieu pour permettre une meilleure diffusion des éléments nutritifs, issus du compostage, dans la terre.

Pour pouvoir insérer un tel compartiment 200 de compostage dans la jardinière 100, un volume de terre est enlevé sur la hauteur et la largeur correspondante aux dimensions dudit compartiment 200. De la terre est conservée dans le fond 110 du bac 101 pour que les éléments nutritifs issus du compostage puissent diffuser dans la terre.

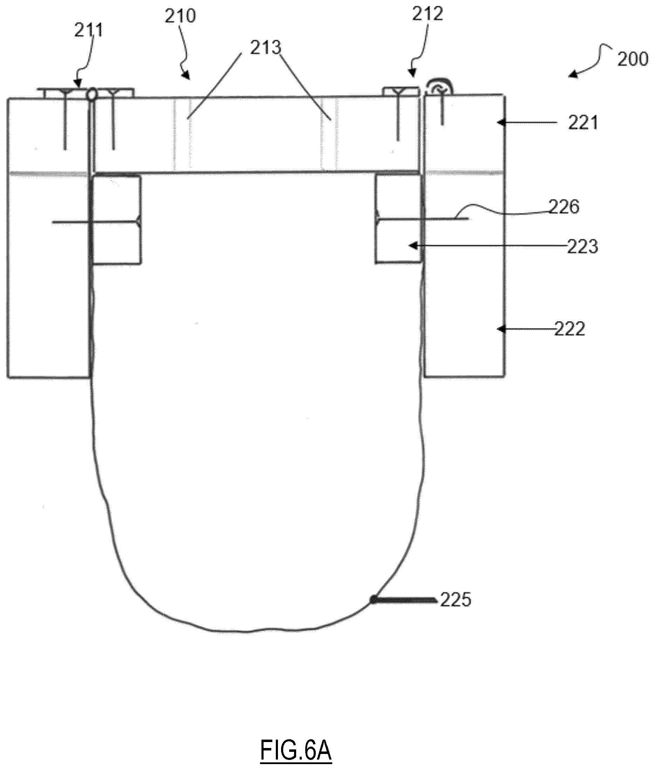

Un premier mode de réalisation de ce compartiment 200 amovible de compostage est représenté sur les figures 6A à 6C. Ce compartiment 200 comprend des montants latéraux 221, 222 en bois imputrescible sur lesquels est fixé un sac de collecte 225 réalisé dans le même matériau que la bâche 125 imperméable souple tapissant les parois 120 et le fond 110 du bac 101. Le fond du sac 225 est avantageusement perforé pour permettre aux nutriments issus de la décomposition des déchets végétaux de diffuser vers la terre située en dessous.

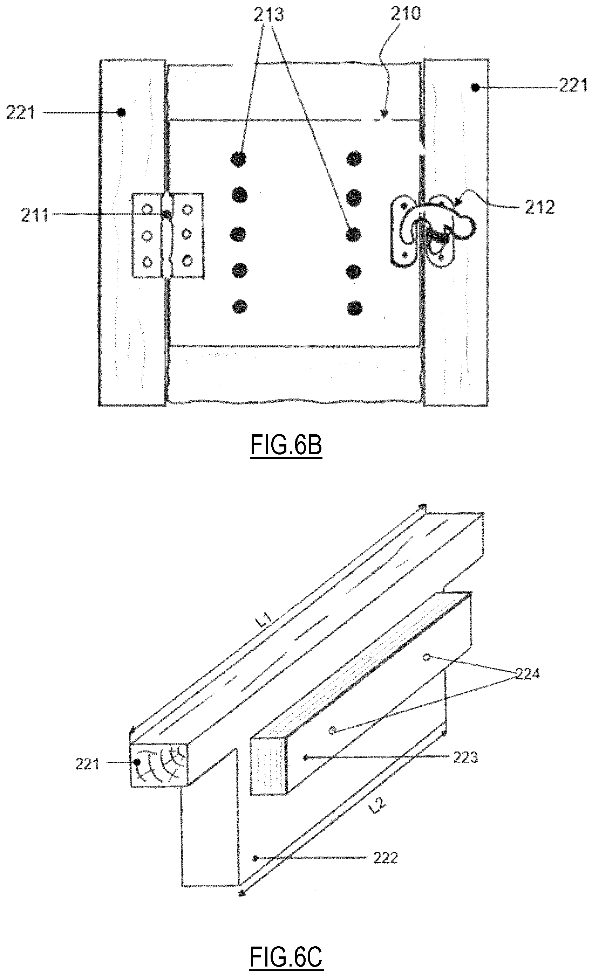

Ledit compartiment 200 est accessible par la partie haute de la jardinière 100 et avantageusement fermé par une porte 210 afin d'éviter l'introduction de nuisibles. Cette porte 210, telle que représentée sur la vue en coupe de la figure 6A ou la vue de dessus de la figure 6B, est articulée, par exemple, au moyen d'une ou plusieurs charnières 211 et fermée au moyen d'un loquet 212 de fermeture. Avantageusement, des orifices débouchant 213 sont pratiqués dans l'épaisseur de la porte 210, à intervalles réguliers, pour permettre une aération du compartiment 200 à compost et éviter un pourrissement des déchets.

La figure 6C représente une vue en perspective d'un montant latéral de ce compartiment 200 souple à compost. Le montant est découpé de manière à présenter un décroché à chacune de ses extrémités, de sorte qu'il comprend une partie supérieure 221 de largeur L1 et une partie inférieure 222 de largeur L2 inférieure à la largeur L1. La largeur L1 de la partie supérieure 221 du montant est sensiblement égale à la largeur du bac 101 de la jardinière 100, de sorte que les extrémités de la partie supérieure 221 reposent sur le bord supérieur et/ou le premier épaulement 121, ou le deuxième épaulement 122, de deux parois 120 opposées du bac 101. La partie inférieure 222 du montant latéral présente une largeur L2 sensiblement inférieure à la largeur du bac 101. Un tasseau 223 est en outre fixé sur la partie inférieure 222 du montant latéral par vissage 226 par exemple, dans des orifices 224. Ce tasseau 223 permet d'une part de fixer le sac de compostage 225 sur le montant latéral 222 et d'autre part, de supporter la porte 210, de sorte que la surface de cette-dernière affleure la surface supérieure du montant 221. L'ouverture du sac de compostage 225 présente des côtés dont les dimensions sont sensiblement égales aux dimensions de la porte 210. Dans un exemple illustratif et non limitatif, le montant latéral peut être réalisé dans du bois de palette, résistant aux variations d'humidité et de température, et le tasseau 223 peut être réalisé dans un contreplaqué encollé de colle de grade WBP, comme le bac 101 de la jardinière 100.

Selon une autre variante de réalisation, le compartiment 200 amovible de compostage peut être rigide et comprend des parois verticales en bois imputrescible fixées à un fond en tôle perforé destiné à reposer sur le fond de terre de la jardinière 100. Les parois verticales sont par exemple réalisées dans le même contreplaqué de bois que le bac 101. Dans ce cas, les parois sont entièrement recouvertes d'une bâche imperméable, afin de mieux les préserver de l'humidité ambiante. La tôle est de préférence une tôle en acier inoxydable 316 L de qualité alimentaire résistante à la corrosion et résistante à toute contamination bactérienne. Le compartiment 200 est accessible par la partie haute de la jardinière 100 et fermé par une porte similaire à celle du compartiment 200 souple qui vient d'être décrit, afin d'éviter l'intrusion de nuisibles à l'intérieur.

Selon un autre mode de réalisation de la jardinière 100, il est possible de prévoir des roulettes fixées sur le fond 110 du bac 101. Selon la taille de la jardinière 100, celle-ci comprend au moins quatre roulettes, dont au moins deux sont équipées d'un système de freinage. De telles roulettes permettent de déplacer la jardinière 100 d'un emplacement à un autre. Cependant, dans le cas où toutes les parois 120 de la jardinière 100 ne sont pas équipées du moyen de refroidissement 135, il convient en outre d'adjoindre sur la jardinière 100 une signalétique apte à permettre une orientation correcte de la jardinière 100 par rapport au soleil, de telle sorte que les parois 120 équipées du moyen de refroidissement 135 soient exposées au soleil tandis que les parois 120 non pourvues de ce moyen de refroidissement 135 soient orientées vers le nord ou contre un mur par exemple. Cette signalétique peut par exemple consister en l'indication des quatre points cardinaux sur la jardinière 100 pour permettre une bonne orientation de celle-ci par rapport à l'exposition au soleil.

Selon encore un autre mode de réalisation, le fond 110 du bac 101 de la jardinière 100 est amovible, de sorte que la jardinière 100 puisse être disposée en pleine terre. Dans ce cas, le bac 101 n'ayant plus de fond, la bâche 125 imperméable ne recouvre que la face interne des parois verticales 120. Les parois verticales 120 étant en contact direct avec la terre, elles sont de préférence réalisées dans un contreplaqué de chêne encollé avec de la colle de grade WBP. Une telle jardinière pleine terre permet de réduire l'érosion du sol en surface dans les régions très ventées et de reconstituer le sol lorsque celui-ci a été trop balayé par les vents.

L'invention concerne en outre une utilisation de la jardinière 100 pour permettre la culture de végétaux. Cette utilisation consiste à remplir le bac 101 d'une première couche de billes d'argile, d'une couche de terre de culture, puis d'une deuxième couche de billes d'argile éventuellement recouverte d'une fine de couche superficielle de terre. Les billes d'argile permettent de retenir trois à quatre fois leur volume en eau. La première couche de billes d'argile disposée sur le fond 110 du bac 101 permet ainsi de drainer l'eau, d'assurer une stabilité et une fraicheur permanente en récupérant la fraicheur ou l'humidité de la nuit et permet ainsi de diminuer la fréquence des arrosages. La deuxième couche de billes d'argile en surface, quant - à elle, permet la récupération d'eau d'évaporation en journée en la restituant le soir. Les deux couches de billes d'argile sont disposées sur une épaisseur avantageusement comprise entre trois et huit centimètres, de préférence de cinq centimètres.

Enfin, il est possible d'associer une réserve d'eau, agencée pour éviter le développement des moustiques, disposée dans le jardin et transportable, permettant d'alimenter une ou plusieurs jardinières 100 simultanément. La réserve peut être conçue pour récupérer des eaux de vaisselle ou douche et/ou des eaux de pluies pour les réutiliser à destination de l'arrosage.

La jardinière 100 qui vient d'être décrite dans la présente est de forme rectangulaire. Cependant, l'invention peut s'appliquer à d'autres formes, telles que, par exemple des formes carrées, polygonales, en L, en T ou en U sans sortir du cadre de l'invention. A titre d'exemple illustratif, la hauteur du bac 101 de la jardinière 100 est généralement comprise entre vingt-cinq et quarante-cinq centimètres mais peut monter jusqu'à un virgule cinq mètre sans que cela ne pose de problème. La largeur du bac 101 est généralement comprise entre vingt et quarante centimètres et peut aller jusqu'à deux mètres pour des bacs 101 de carrés potagers. La longueur du bac 101 est généralement comprise entre soixante centimètres et deux virgule cinq mètres.

Le compartiment 200 de compostage amovible, lorsqu'il est destiné à s'intégrer dans une jardinière 100 rectangulaire par exemple, présente avantageusement une hauteur comprise entre vingt et quarante centimètres, une largeur comprise entre treize et trente-cinq centimètres et une longueur comprise entre treize et quarante-cinq centimètres.

La jardinière 100 qui vient d'être décrite, réalisée à base d'un matériau bois, bon isolant thermique et comprenant au moins un moyen de refroidissement 135 sur au moins la paroi 120 la plus exposée au soleil, permet de diviser par deux la température de ladite paroi 120, de sorte que l'évaporation de l'eau contenue dans la terre est mieux maitrisée et les végétaux ne souffrent pas de la chaleur environnante. Le parement extérieur 150, dont la hauteur varie sur le pourtour de manière à optimiser les zones ombragées, et les premier et deuxième épaulements 121 et 122, aptes à condenser de l'eau d'évaporation, permettent de conserver l'humidité contenue dans la terre de culture pendant une période bien plus longue que les jardinières classiques. De plus, l'utilisation de billes d'argile contribue également à la régulation de l'humidité contenue dans la jardinière 100. Toutes ces caractéristiques concourent d'une part à conserver une humidité constante dans la terre, sans avoir recours à une réserve d'eau intégrée et donc en évitant la prolifération de moustiques et d'autre part, à limiter grandement la fréquence des arrosages. Ainsi, une telle jardinière 100 ne nécessite des arrosages qu'à quelques semaines d'intervalle en période de canicule.

## Revendications

1. Jardinière (100) destinée à la culture de végétaux, ladite jardinière comprenant un bac (101) apte à accueillir de la terre et des végétaux, ledit bac étant constitué d'un fond (110) et de parois verticales (120), d'une bâche (125) imperméable recouvrant la face interne des parois verticales (120) et le fond (110) du bac (101) de manière à isoler le bac (101) de l'humidité contenue dans la terre, ladite jardinière (100) étant **caractérisée en ce que** le bac (101) est réalisé dans un bois résistant aux variations d'humidité et de température, **en ce qu'**un parement extérieur (150) habille la face externe des parois (120) du bac (101), et **en ce qu'**au moins une paroi (120) dudit bac (101), destinée à être exposée au soleil, est équipée d'un moyen de refroidissement (135), ledit moyen de refroidissement (135) comprenant un entrecroisement d'au moins deux montants (130) fixés à au moins deux traverses (140), lesdits montants (130) étant espacés l'un de l'autre et lesdites traverses (140) étant espacées l'une de l'autre, ledit entrecroisement étant fixé entre la face externe de ladite au moins une paroi (120) et le parement extérieur (150), de manière à créer un espace de circulation d'air (135) favorisant un refroidissement de ladite paroi (120).

2. Jardinière (100) selon la revendication 1, **caractérisée en ce que** l'entrecroisement du moyen de refroidissement (135) est perpendiculaire et fixé de sorte que les montants (130) sont positionnés verticalement et parallèles entre - eux, fixés sur la face externe de ladite au moins une paroi (120) et régulièrement espacés le long de la largeur de ladite paroi (120) et les traverses (140) sont positionnées horizontalement et parallèles entre - elles, fixées sur lesdits montants (130) et régulièrement espacées le long de la hauteur de ladite paroi (120).

3. Jardinière (100) selon l'une des revendications précédentes, **caractérisée en ce qu'**elle comprend un premier épaulement (121) fixé sur une zone supérieure de la face interne des parois (120) du bac (101) et au-dessus de la surface de la terre, ledit premier épaulement (121) permettant d'une part de maintenir la bâche (125) fixement contre la face interne des parois (120) du bac (101), et d'autre part de condenser de l'eau d'évaporation en fines gouttelettes destinées à retomber par gravité dans la jardinière (100).

4. Jardinière (100) selon la revendication 3, **caractérisée en ce qu'**elle comprend un deuxième épaulement (122), reposant sur le bord supérieur d'au moins une paroi (120) du bac (101) et/ou sur le premier épaulement (121), ledit deuxième épaulement (122) présentant une surface plus importante que le premier épaulement (121) et étant apte à projeter une ombre portée sur la surface de la terre et à condenser de l'eau d'évaporation en fines gouttelettes destinées à retomber par gravité dans la jardinière (100).

5. Jardinière (100) selon l'une des revendications précédentes, **caractérisée en ce que** la hauteur du parement extérieur (150) varie le long du pourtour du bac (101) et est au moins égale à la hauteur des parois (120) du bac (101), de sorte que chaque hauteur projette une ombre portée différente sur la surface de terre.

6. Jardinière (100) selon l'une des revendications précédentes, **caractérisée en ce qu'**au moins deux moyens d'évacuation (160) sont prévus dans le fond (110) du bac (101), chaque moyen (160) comprenant un orifice débouchant (114), pratiqué dans l'épaisseur du fond (110) du bac (101) et accueillant un tube (163) creux (161), de forme sensiblement conique et complémentaire dudit orifice (114), ledit tube (163) présentant une collerette (162) affleurant la surface du fond (110) du bac (101) et une partie cylindrique (164) en saillie sous le fond (110) du bac (101) ; et un joint d'étanchéité (165) destiné à maintenir fixement ledit tube (163) et ladite bâche (125) en position contre l'épaisseur (116) dudit orifice (114).

7. Jardinière (100) selon l'une des revendications précédentes, **caractérisée en ce qu'**elle comprend en outre un compartiment amovible de compostage (200), ledit compartiment (200) étant accessible par la partie haute de la jardinière (100) et comprenant des montants latéraux (221, 222) et un fond perforé reposant sur une couche de terre de ladite jardinière (100), ledit compartiment (200) étant apte à être fermé au moyen d'une porte (210).

8. Jardinière (100) selon l'une des revendications précédentes, **caractérisée en ce que** le bois de constitution du bac (101), des montants (130) et des traverses (140) est un contreplaqué encollé avec de la colle résistante à l'eau (WPB), le bois de constitution du contreplaqué étant choisi parmi le bouleau, le chêne, le peuplier, le châtaignier, le mélèze, le douglas, le robinier, l'iroko ou le teck.

9. Jardinière (100) selon l'une des revendications précédentes, **caractérisée en ce qu'**elle comprend au moins quatre roulettes, dont au moins deux sont équipées d'un système de freinage, et une signalétique apte à permettre une orientation correcte de la jardinière (100) par rapport au soleil.

10. Utilisation de la jardinière (100) selon l'une des revendications 1 à 9, **caractérisée en ce qu'**elle consiste à remplir le bac (101) d'une première couche de billes d'argile, à recouvrir ladite première couche par une couche de terre, puis à recouvrir ladite couche de terre par une deuxième couche de billes d'argile.
